# EUROPEAN PATENT APPLICATION

(11) **EP 1 788 819 A2**
(43) Date of publication of application: **23.05.2007**
(21) Application number: 06076940.3
(22) Date of filing: 26.10.2006
(51) Int. Cl.: H04N 7/50

(54) **Selective post-processing of compressed digital video**

(30) Priority: 16.11.2005 US 280907
(71) Applicant: Delphi Technologies, Inc., Troy, Michigan 48007 (US)
(72) Inventor: Fetkovich, John E., Kokomo, IN 46902 (US)
(74) Representative: Denton, Michael John

(57) **Abstract**

The primary issue regarding the transmission of digital video to automobiles is limited bandwidth. To help combat bandwidth issues, compression techniques have been developed to reduce the high bit rate required for transmission and storage. However, methods for improving the perceived quality of digital imagery, particularly at low bit rates, are critical. The present invention discloses a technique that will improve the perceived quality of digital imagery to the viewer by using selective post-processing of decompressed digital video. The human visual system (HVS) is very sensitive to human eyes and faces. Regions of interest (ROI), such as human eyes or faces, are selectively post-processed in appropriate video frames prior to being displayed to the viewer. If a subject's eyes are sharp, the viewer will perceive good image quality, despite poor rendition elsewhere. If the subject's eyes are blurry or poorly rendered, the frame will appear poor to the viewer, despite sharpness elsewhere.

## Description

### TECHNICAL FIELD

The present invention generally relates to the transmission and processing of digital data, and more particularly, to the transmission and processing of digital data in a Direct Broadcast Satellite (DBS) system.

### BACKGROUND OF THE INVENTION

Satellite television has its origins in the space race that began with the launching of the satellite Sputnik by the Russians in 1957. The first communication satellite, known as Syncom II, was developed and launched by a consortium of business and government entities in 1963. Television began using satellites on March 1, 1978 when the Public Broadcasting Service (PBS) introduced Public Television Satellite Service. Broadcast networks adopted satellite communication as a distribution method from 1978 through 1984.

In a period of just over 50 years, the satellite industry has evolved into a major home entertainment provider and a pivotal information delivery technology. The inception and growth of the satellite industry has been made possible by a variety of factors including major technological developments, advances in digital technology and successive improvements in hardware. Satellites are now used for voice, data, and television communications worldwide. Communications satellites were originally designed for commercial purposes for sending telephone, radio, television, and other signals across the country and around the world for re-transmission to businesses and homes by local telephone companies, television stations, or cable companies.

Direct Broadcast Satellite (DBS) or "direct to home" receivers were developed in the early 1980's. Rural areas gained the capacity to receive television programming that was not capable of being received by standard methods. Before long broadcasters began to complain that their signals were being illegally received. In response to the pirating of satellite signals, broadcasters began to scramble the signals they were broadcasting. Users, in turn, had to buy a decoder from a satellite program provider in order to unscramble the signal for viewing.

In October of 1997, the Federal Communications Commission (FCC) granted two national satellite radio broadcast licenses. In doing so, the FCC allocated 25 megahertz (MHz) of the electromagnetic spectrum for satellite digital broadcasting, 12.5 MHz of which are owned by XM Satellite Radio, Inc. of Washington, D.C. ("XM"), and 12.5 MHz of which are owned by Sirius Satellite Radio, Inc. of New York City, N.Y. ("Sirius"). Both companies provide subscription-based digital audio that is transmitted from communication satellites, and the services provided by these - and eventually other - companies (i.e., SDAR companies) are capable of being transmitted to both mobile and fixed receivers on the ground.

The transmission of digital video, especially in automobiles, is not without its issues. Streaming technologies are designed to overcome the fundamental problem facing the transmission of multimedia elements: limited bandwidth. Bandwidth generally refers to amount of data that can be transmitted in a fixed amount of time. For digital devices, the bandwidth is usually expressed in bits per second (its bit rate). To help combat bandwidth issues, compression techniques have been developed to reduce the high bit rate required for transmission and storage. Video compression is applied to a series of consecutive images in a video stream. MPEG is one example of a compression technique. MPEG-2 was approved in 1994 as a standard and was designed for high quality digital video. Compressed video is decompressed at the receiver by a decoder prior to presentation to the viewer.

Many automobiles are equipped to receive digital media by satellite. However, digital media transmitted via satellite is currently limited to audio at approximately 48 kilobits per second (per channel). The delivery of digital video requires a relatively large amount of bandwidth to function effectively. For example, the compressed video available on DVD discs is encoded at about 4 megabits per second. A low amount of bandwidth may result in the digital imagery appearing blocky to the viewer.

### SUMMARY OF THE INVENTION

The present invention discloses a technique for improving the perceived quality of video frame data. Region of interest (ROI) location data (i.e., location of a subject's eyes or face) is generated and embedded as side information, along with the encoded video frame, into a video stream and transmitted to the receiver. The video stream is received and the encoded video frame is decompressed at the receiver. The side information is read for information regarding the ROI and the ROI is processed to create an enhanced video frame. A sharpening, brightening, noise-reducing, noise-adding, or contrast-increasing algorithm may be applied to the eyes to enhance the perceived quality of the image. The enhanced video frame is then presented to the viewer.

The disclosed technique improves the perceived quality of digital imagery to the viewer, particularly at low bit rates, by using selective post-processing of decompressed digital video. New compression standards such as H.264 improve the image quality greatly over MPEG, but still fall short. The human visual system (HVS) is very sensitive to human eyes and faces. Regions of interest (ROI), such as human eyes or faces, are selectively post-processed in appropriate video frames prior to being displayed to the viewer. If a subject's eyes are sharp, the viewer will perceive a good image quality even if other portions of the video frame have a lesser quality. If the subject's eyes are blurry, the frame will appear poor to the viewer.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Figures 1a and 1b are flow chart diagrams of techniques for transmitting and receiving Region of Interest (ROI) data as side information.
Figure 2 is a schematic representation of an apparatus for transmitting ROI data as side information.
Figure 3 is a schematic representation of an apparatus for receiving ROI data as side information.
Figure 4 is flow chart diagram of a technique determining the location of the ROI at the receiver and processing the ROI.
Figure 5 is a schematic representation of an apparatus for determining the location of the ROI and processing the ROI.

Corresponding reference characters indicate corresponding parts throughout the several views. Although the drawings represent embodiments of the present invention, the drawings are not necessarily to scale and certain features may be exaggerated in order to better illustrate and explain the present invention. The exemplification set out herein illustrates an embodiment of the invention, in one form, and such exemplifications are not to be construed as limiting the scope of the invention in any manner.

### DESCRIPTION OF THE PREFERRED EMBODIMENTS

The embodiments disclosed below are not intended to be exhaustive or limit the invention to the precise forms disclosed in the following detailed description. Rather, the embodiments are chosen and described so that others skilled in the art may utilize their teachings.

For the purposes of the present invention, certain terms shall be interpreted accordance with the following definitions.

"Bandwidth" generally refers to amount of data that can be transmitted in a fixed amount of time. For digital devices, the bandwidth is usually expressed in bits per second, (bps) or bytes per second. For analog devices, the bandwidth is expressed in cycles per second, or Hertz (Hz).

"Channel" hereinafter refers to the path along which a communications signal is transmitted.

"Codec" or "Coder/Decoder" generally refers to a device that compresses or decompresses a digital video or audio signal.

"Compression" or "Encoding" generally refers to the process of reducing the information content of a signal, or the data size of a file so that it occupies less space on a transmission channel or storage device. While video compression schemes are generally 'lossy,' meaning that they do discard some information, the information discarded is that to which the human visual system is least sensitive.

"Decoding" or "Decompression" generally refers to the process of converting compressed video data to a viewable image by the process of expanding a compressed signal or file.

"Direct Broadcast Satellite" or "DBS" hereinafter refers to a technology to deliver a television or audio signal digitally, directly from a satellite to a consumer's dish or receiver.

"Frame" generally refers, in the context of streaming media, to a single picture or time period of audio media, or to a group of serial data bits. While frames may be thought of as single photos, graphics, notes, or noises, each frame may be represented in many different formats. For example, the most complete and independent format of a frame may be a complete pixelated image, whereas a frame in a media stream may be more efficiently represented as noting only the pixels which have changed from the prior frame.

"H.264" hereinafter refers to a state-of-the-art video codec that delivers high quality at relatively low data rates. Ratified as part of the MPEG-4 standard (MPEG-4 Part 10), this relatively efficient technology provides improved results (versus MPEG-2) across a broad range of bandwidths.

"Media" or "media data" generally refers to encoded data representing audio, video, graphic, or other presentation information/content.

"Media player" hereinafter refers to a hardware device containing software that allows a user to play and manage audio and video files.

"MPEG" or "Moving Picture Experts Group" hereinafter refers to the name of family of standards used for coding audio-visual information (e.g., movies, video, music) in a digital compressed format. MPEG-2 standard definition video offers a resolution of 720 x 480 pixels at 30 frames per second (NTSC).

"Specular" hereinafter refers to the highlights created by light rays reflecting off a shiny surface. It is an important component of a material's definition because it suggests curvature in 3-dimensional space.

"Streaming" generally refers to techniques for transferring media data which is rendered in real time. Streaming allows a user to see and/or hear the information as it arrives without having to wait for the entire file to be transferred. Streaming technology thus allows media data to be delivered to a client as a continuous flow with minimal delay before playback can begin. In streaming data, content is rendered in real-time and therefore must arrive at the receiver before its designated presentation time else be effectively lost to the viewer.

"Track" generally refers to a predefined segment or portion of media data.

"Video Stream" generally refers to a bit sequence of compressed digital video. Another term for a video sequence.

Many automobiles are equipped to receive digital media by satellite. However, this media is currently limited to audio at a bit rate of approximately 48 kilobits per second per channel. The delivery of digital video is problematic due to the far greater bandwidth that video consumes. New compression standards such as H.264 provide improved compression (versus MPEG-2), but methods for improving the perceived quality of digital imagery, particularly at low bit rates, are still critical.

Compression schemes such as MPEG and H.264 take advantage of both spatial and temporal redundancies in a typical video sequence. Spatial redundancy means that, within a given frame, any given area is statistically likely to be visually similar to nearby areas. For example, a patch of blue sky probably falls near other patches of blue sky. Temporal redundancy means that, within two adjacent (or chronologically nearby) frames, for a given area in frame 'n,' a similar area is statistically likely to appear in frame n-1, n+1, n-2, n+2, etc. For example, if a car appears in frame n, a visually similar car probably appears in frame n-1 and/or n+1. And, while the car (or camera) may be moving, the car's physical location in these frames is nonetheless related (that is, the car is unlikely to have moved very far in one frame period so its coordinates in each frame are similar).

Furthermore, many compression schemes use a fundamental mathematical transform (such as the Discrete Cosine Transform, or DCT) to convert spatial data into frequency-domain data. This transform often operates upon blocks of pixels of a fixed size--for example in MPEG the DCT is applied to 8x8 pixel 'blocks.' A 16x16-pixel area (comprising four blocks) is known as a 'macroblock;' a macroblock is the fundamental unit of compression.

MPEG and H.264 specify three types of video frames: intra frames (I-frames) are 'self-contained' and may be decoded without reference to any other frames. I-frames may also be known as 'key' frames, and are often placed periodically within a stream for purposes of random access. Predictive frames (P-frames) reference at most one previous picture; bi-predictive frames (B-frames) reference at most one previous and one future frame. For a macroblock currently being encoded, 'motion vectors' are used to 'point' to an optimally similar area in one (for a P-frame) or two (for a B-frame) nearby frames. So, to correctly decode a P-frame, the decoder requires not only the P-frame, but also the prior picture it references. To decode a B-frame, the decoder requires not only the current frame but also the future and past frames to which it refers (video frames are transmitted out-of-order to accommodate the reference to 'future' frames). Note that in some compression schemes, a B-frame may only refer to I- and P-frames; in others B-frames may also refer to other B-frames. Since, during encoding, P-frames have the use of both temporal and spatial redundancy at their disposal, they are more efficiently encoded and therefore typically smaller than I-frames. And since B-frames have the use of two reference frames-one forward- and one backward-looking-for temporal redundancy, they are generally smaller still than P-frames. A 'group of pictures' (GOP) typically comprises an initial I-frame and any following P- and B-frames up to, but not including, the next I-frame.

In H.264, B-frames may be only a few kilobits in size. This means that the addition of even a few bytes of region-of-interest data can be egregious since it significantly increases the amount of data transmitted per picture. Therefore methods of limiting the bandwidth of region-of-interest data are welcome. One such method is described here. The present invention provides a method for improving the perceived quality of digital imagery by using selective post-processing of decompressed digital video. The technique is derived from principles of still photography and the human visual system (HVS), in which the quality of the reproduction of a human's eyes in an image is disproportionately critical to the viewer's satisfaction with the image. An image which includes a primary human or animal subject with eyes visible will not be perceived as 'sharp' if the eyes are out of focus or otherwise blurred despite sharpness elsewhere. Similarly, the image will be acceptable if the subject's eyes are in focus, and may appear more visually compelling (i.e. realistic) if the specular highlights of the eyes are apparent or enhanced.

Region-of-interest data may be explicitly specified for the initial frame of a video sequence (an I-frame). ROI data may optionally be explicitly specified for any following P- or B-frames. If ROI data is explicit, it overrides any other consideration and is used exclusively to define areas for post-processing in that frame. If no area is explicitly defined, however, motion vectors may be used to 'track' the region of interest defined for a previous frame. Consider a stream comprising frame types (in *display* order) IbbPbbPbbPbbIbbPbbP... (which are *transmitted* in the order IPbbPbbPbbIbbPbbPbb...) If ROI data is specified for the initial I-frame, macroblocks that compose the ROI are marked and remembered (i.e., stored in memory) by the decoder. When the second frame (a P-frame) is decoded, any macroblock in the P-frame whose motion vector points into (i.e., to a macroblock that was encompassed by or overlapped by) the ROI area for the initial I-frame, is marked for post-processing. Likewise, in the first B-frame, macroblocks whose motion vectors point into a ROI area in either the I- or P-frame it references may also be marked as a ROI in the current B-frame and thus eligible for post-processing. In the case of a B-frame, for which a macroblock may be derived from a weighted combination of two reference macroblocks (from two distinct frames), a threshold may be set to determine whether that weighting is strong enough to consider such a B-frame macroblock inside or outside a ROI.

Because it is possible for a non-region of interest in frame n to contain motion vectors that point into a region of interest in a nearby frame, one bit may be allocated and used by the encoder to signal a ROI 'reset.' This instructs the decoder to disregard any ROI data inferred from motion vector references to other frames--in this case, no ROI will be marked for post-processing until explicit ROI data accompanies a future video frame.

Since each group of pictures begins with an independent I-frame, no ROI data may be inferred since the frame references no others (in other words, each I-frame also acts as a 'reset' from a ROI perspective). However, this technique allows the encoder to stipulate an explicit ROI for any frame within a group of pictures without having to explicitly stipulate ROI data for subsequently transmitted frames in the same GOP. At the same time, it allows the encoder the flexibility to specify an ROI for any given frame, overriding inferred areas. This technique yields a considerable bits-per-picture savings for ROI data versus explicit ROI data on a per-picture basis.

The location of the ROI, which in the exemplary embodiment is a subject's eyes or face, in a video frame may be predetermined in the editing room by human editing or eye- or face- recognition based software and transmitted as 'side information' in the video stream. The first of these two approaches introduces extra data to be transmitted but has the advantage of performing eye location once at the source rather than placing that computational burden on every receiver. The transmission of the side information may be implemented in either of the following embodiments.

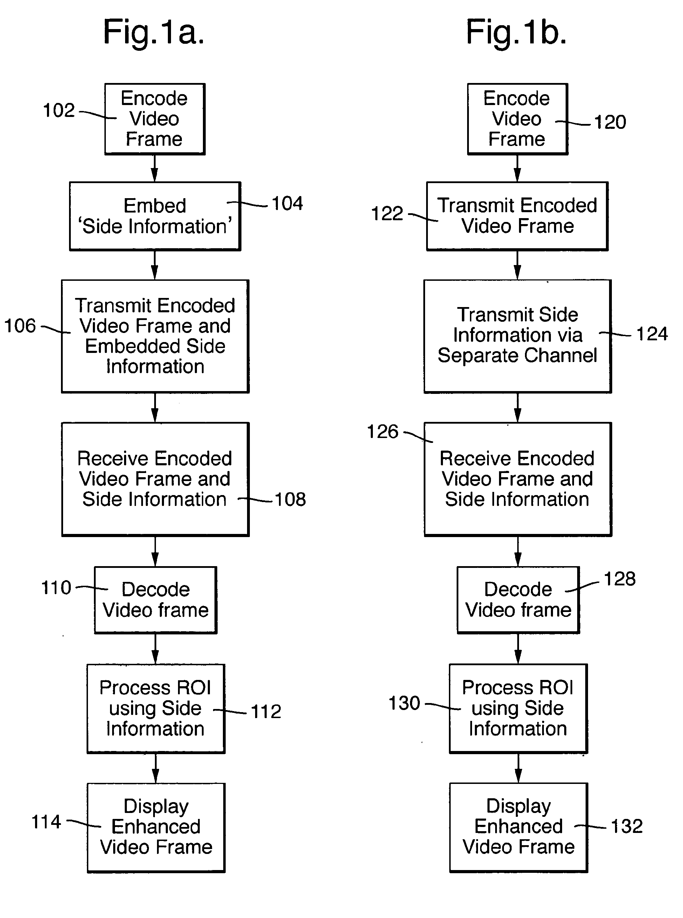

In one embodiment depicted in Figure 1a, a video frame is encoded (step 102). The predetermined location of the ROI is embedded as side information, along with the encoded video frame, into the video stream (step 104). The video stream including the encoded video frame and side information is transmitted to the receiver (step 106). The video stream is received (step 108) and the video frame is decompressed at the receiver (step 110). The side information is read for information regarding the ROI and the ROI is processed (step 112). A sharpening, brightening, noise-reducing, noise-adding or contrast-increasing algorithm may be applied to the eyes to enhance the perceived quality of the image. The video frame is then presented to the viewer (step 114).

In another embodiment depicted in Figure 1b, the process is similar. The video frame is encoded (step 120) and the encoded video frame is transmitted (step 122). The side information regarding the ROI is transmitted to the receiver via a separate channel (step 124). The encoded video frame and side information are both received at the receiver (step 126). The video frame is decoded (step 128) and the ROI in the decompressed video frame is processed using the side information that was received (step 130). The enhanced video frame is then displayed (step 132).

Such side information may comprise, for example, the coordinates of an eye's center, its elliptical eccentricity, and axis- or more simply, a rectangle that bounds the eye. A receiver not equipped with the appropriate algorithm, or limited in its processing abilities, may ignore the side information and display the decompressed image directly. A suitably equipped receiver may then process the sensitive areas of the image by enhancing them before display. The idea may be extended to enhance the entirety of human faces, rather than only the eyes, if the computational resources at the receiver are sufficient.

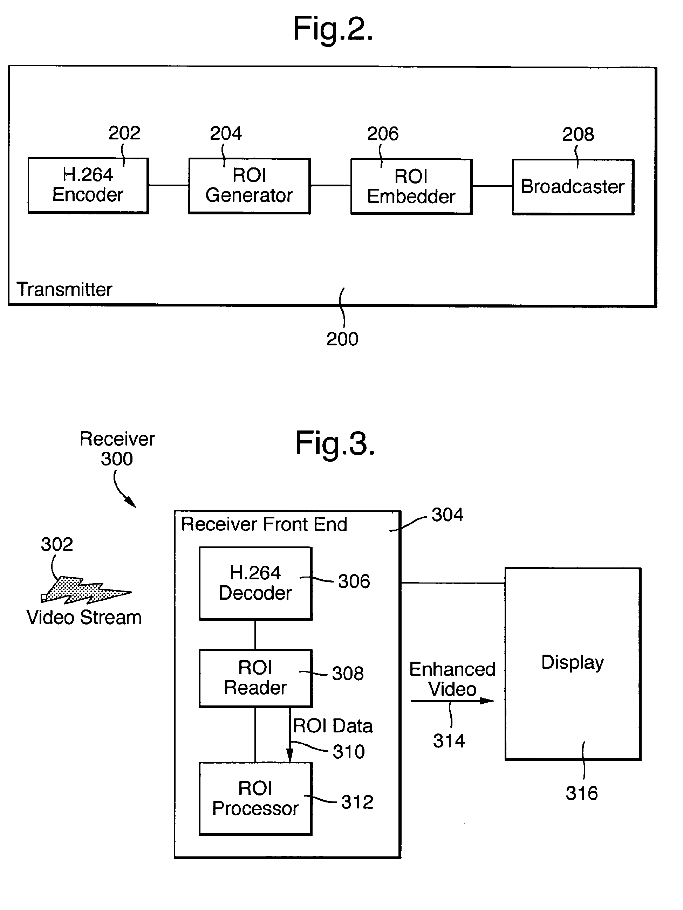

One exemplary form of the present invention is shown in Figure 2. In the depicted embodiment, transmitter 200 has encoder circuitry 202 that is coupled to ROI Generator 204. Encoder 202 compresses the video frame. ROI Generator 204 generates the ROI location information. Typically the region of interest is determined before (or perhaps during) encoding. The location of a subject's eyes in a video frame may be predetermined in the editing room by human editing or eye recognition based software. ROI Embedder 206 embeds the ROI location data as side information into the video stream along with the encoded video frame. Broadcast circuitry 208 transmits the video stream via a single channel. In another embodiment, the ROI side information is not embedded in the video stream. Rather, the side information is transmitted by broadcast circuitry 208 via a separate channel to the receiver.

In another embodiment of the present invention as shown in Figure 3, receiver 300 receives and processes the ROI location data transmitted as side information. Receiver 300 receives video stream 302. Receiver front end 304 includes Decoder 306 and ROI processor 312. Decoder 306 decodes the encoded video frame. ROI Reader 308 reads the ROI location information that was received in the video stream. ROI processor 312 enhances the region of interest in the decoded video frame using ROI location data 310. Enhanced video frame 314 is then presented to the viewer via Display 316. In one embodiment, the side information is embedded in the video stream and received via a single channel. In another embodiment, the encoded video frame and the side information are received via separate channels.

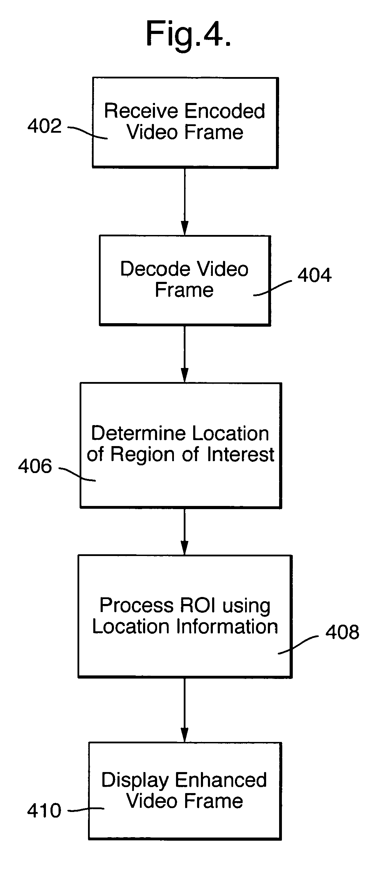

In still another embodiment of the present invention shown in Figure 4, the location of the region of interest (for example, the eyes) is determined at the receiver, rather than being pre-determined and sent via the transmitter. The encoded video frame is received (step 402) and decoded (step 404) at the receiver. The location of the eyes is determined at the receiver (step 406). Location of the eyes may be determined at the receiver by facial recognition or eye recognition software. For example, one known face recognition software product is FaceIt Argus (FaceIt is a registered trademark of Identix Incorporated of Minnetonka, MN). Such software processes video data to identify specific features for biometric identity verification, and so may be used to locate features of the video image, such as the entire face or only the eyes, rather than for identification purposes. Once the location of the eyes (or face) is determined, the eyes (or face) may be enhanced to improve the perceived quality of the video frame (step 408). The enhanced video frame is then displayed to the viewer (step 410).

While the foregoing example enhances the appearance of eyes in the video frame to increase the perceived image clarity and quality, in other types of video presentations other features may be enhanced to increase the perceived image clarity and quality. Thus, while the exemplary embodiment of the present invention uses human eyes as the region of interest, other features of a video frame may be designated as the region of interest for a similar effect.

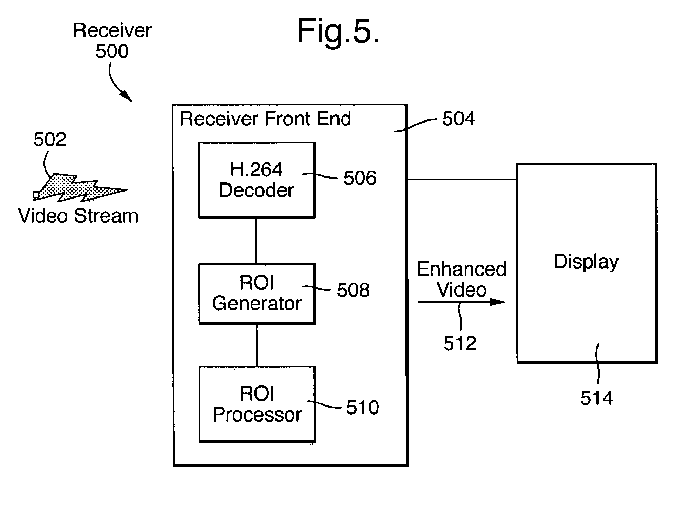

In another embodiment of the present invention shown in Figure 5, receiver 500 receives video stream 502 that includes an encoded video frame, but no side information regarding the region of interest. The location of the ROI is determined at receiver 500. Receiver front end 504 includes decoder 506, ROI generator 508, and ROI processor 510. Decoder 506 decodes the encoded video frame. ROI generator 508 includes software used to determine the location of the ROI (eyes, for example). ROI generator 508 may use facial recognition or eye recognition software to determine the location of the eyes. ROI processor 510 reads this information and enhances the ROI in the video frame. Enhanced video frame 512 is then presented to the viewer via Display 514.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method for transmitting media data, comprising the steps of:
a. encoding video frame data (102; 120);
b. transmitting encoded video frame data (106; 122); and
c. transmitting region of interest (ROI) location data associated with the encoded video frame data (104; 106; 124).

2. The method of claim 1 wherein step (c) the ROI location data is embedded with the encoded video frame data and transmitted via one channel.

3. The method of claim 1 wherein step (c) the encoded video frame data and the ROI location data are transmitted via separate channels.

4. The method of claim 1 further comprising generating the ROI location data using a human editing process.

5. The method of claim 1 further comprising generating the ROI location data using one of facial recognition software and eye recognition software.

6. The method of claim 1 further comprising generating the ROI location data in relation to an initial frame.

7. The method of claim 6 wherein step (c) may include transmitting an ROI reset bit with the encoded video frame data.

8. An apparatus for transmitting media data in a digital transmission system, said apparatus comprising:
a. an encoder (202), adapted to encode video frame data; and
b. a transmitter (208) coupled to said encoder, said transmitter adapted to transmit the encoded video frame data and ROI location data associated with the encoded video frame data.

9. The apparatus of claim 8 further comprising embedding circuitry (206) adapted to embed ROI location data with the encoded video frame and said transmitter coupled to said embedding circuitry, said transmitter adapted to transmit the encoded video frame data and ROI location data via one channel.

10. The apparatus of claim 8 wherein said transmitter is configured to transmit the encoded video frame data and ROI location data via separate channels.

11. The apparatus of claim 8 wherein said transmitter is configured to transmit a ROI reset bit with the encoded video frame data.

12. A method for presenting media data, comprising the steps of:
a. receiving encoded video frame data (402);
b. obtaining region of interest (ROI) location data (406);
c. decoding the encoded video frame data (404);
d. processing the decoded video frame using ROI location data to create enhanced video frame data (408); and
e. presenting enhanced video frame data (410).

13. The method of claim 12 wherein steps (a) and (b) the encoded video frame data and ROI location data are received from the same channel.

14. The method of claim 12 wherein steps (a) and (b) the encoded video frame data and ROI location data are received from separate channels.

15. An apparatus for presenting media data in a digital transmission system, said apparatus comprising:
a. a receiver (504) adapted to receive encoded video frame data;
b. a decoder (506) coupled to the receiver, said decoder adapted to decode video frame data;
c. an ROI processor (510) coupled to said decoder, said ROI processor adapted to process the video frame data using ROI location data to create enhanced video frame data; and
d. a video display (514) adapted to display enhanced video frame data.

16. The apparatus of claim 15 wherein said receiver is adapted to receive the encoded video frame data and ROI location data from one channel.

17. The apparatus of claim 15 wherein said receiver is adapted to receive the encoded video frame data and ROI location data from separate channels.

18. The apparatus of claim 15 further comprising:
a. locating circuitry (508) adapted to calculate ROI location data by determining the location of the region of interest.

19. The apparatus of claim 15 further comprising:
a. locating circuitry (508) adapted to calculate ROI location data by determining the location of the region of interest by one of face recognition software and eye recognition software.

20. The apparatus of claim 15 further comprising:
a. locating circuitry (508) adapted to calculate ROI location data by determining the location of the region of interest by reference to an intra-frame.
